## Europäisches Patentamt
## European Patent Office
## Office européen des brevets

(19)

(11) Numéro de publication : **0 172 078**
**B1**

(12)

# FASCICULE DE BREVET EUROPÉEN

(45) Date de publication du fascicule du brevet :
04.05.88

(51) Int. Cl.⁴ : **A 47 J 27/00, H 05 B 3/06**

(21) Numéro de dépôt : 85401461.0

(22) Date de dépôt : 17.07.85

(54) Chaudière pour appareil ménager électrique.

(30) Priorité : 25.07.84 FR 8411788

(43) Date de publication de la demande :
19.02.86 Bulletin 86/08

(45) Mention de la délivrance du brevet :
04.05.88 Bulletin 88/18

(84) Etats contractants désignés :
BE CH DE FR GB IT LI NL

(56) Documents cités :
FR-A- 883 862
FR-A- 2 307 430
FR-A- 2 423 111

(73) Titulaire : SEB S.A.
F-21260 Selongey (FR)

(72) Inventeur : Hennuy, Jean
En Machon Chervinges
F-69400 Villefranche/Saone (FR)
Inventeur : Seguret, René
1 rue du Vieux Cep Limas
F-69400 Villefranche/Saone (FR)

(74) Mandataire : Bouju, André
Cabinet Bouju 38 avenue de la Grande Armée
F-75017 Paris (FR)

EP 0 172 078 B1

Jouve, 18, rue St-Denis, 75001 Paris, France

## Description

La présente invention concerne une chaudière pour appareil ménager électrique, notamment pour un appareil de traitement de la peau du visage par pulvérisation de lotion ou de vapeur d'eau, un sona facial, un inhalateur, un chauffe-serviette, un épilateur à cire fondue ou une chocolatière.

On connaît déjà de nombreuses structures de chaudière pour appareil ménager électrique servant à fondre ou à vaporiser des produits très variés. On sait que pour obtenir une fusion ou une vaporisation rapide il est souhaitable d'avoir un bon contact entre l'organe chauffant et le récipient de la chaudière.

Dans les dispositifs existants, l'organe chauffant est maintenu appliqué soit contre le fond du récipient soit contre la paroi latérale. Dans un cas comme dans l'autre, l'organe chauffant n'est en contact avec le récipient que par une de ses faces et une partie de la chaleur produite par l'organe chauffant est donc perdue. De plus, dans le cas d'un organe chauffant disposé contre la paroi latérale, cette disposition augmente la largeur de l'appareil d'autant plus qu'il est généralement nécessaire de prévoir un habillage isolant vis-à-vis de l'extérieur de l'appareil.

Il est également connu de disposer l'organe chauffant entre deux parties de récipients. En particulier, le brevet Français 883.862 décrit une chaudière formée à partir de deux parties de récipient fixées l'une à l'autre par des boulons. Ce type de structure présente toutefois des risques de fuite lorsque la chaudière a été soumise à des échauffements et des refroidissements alternés faisant jouer les parties de récipient l'une par rapport à l'autre.

Un but de la présente invention est de proposer une chaudière pour appareil ménager électrique ayant une puissance de chauffe élevée pour un encombrement faible.

En vue de la réalisation de ce but, on prévoit une chaudière pour appareil ménager électrique comprenant un récipient comportant au moins deux éléments de paroi en regard et ayant un profil complémentaire d'un organe chauffant disposé entre ces éléments de paroi, caractérisé en ce que les éléments de paroi sont reliés entre eux par une partie de paroi déformable formant un pont et en ce que des moyens de rappel maintiennent les éléments de paroi en appui contre l'organe chauffant moyennant déformation de la partie de paroi formant un pont.

Ainsi, par la déformation de la partie de paroi formant un pont, l'organe chauffant est maintenu en contact avec la paroi du récipient sur une grande partie de sa surface et l'on dispose d'une puissance de chauffe élevée pour un faible encombrement.

Selon une version avantageuse de l'invention, les moyens de rappel comprennent un anneau fendu en matériau à ressort de préférence disposé dans une rainure de retenue s'étendant sur une partie au moins du pourtour du récipient et le récipient présente un épaulement dirigé vers l'intérieur dans la zone d'application des moyens de rappel. Ainsi, un serrage très efficace est obtenu sans augmenter la dimension extérieure de la chaudière.

Selon un autre aspect de l'invention, la chaudière comporte à sa partie supérieure une grille de répartition du produit à chauffer. Ainsi, le produit à chauffer se trouve régulièrement réparti de part et d'autre de l'ensemble des éléments de paroi en contact avec l'organe chauffant et le produit est donc chauffé très rapidement.

Selon une version avantageuse, le récipient de la chaudière comporte un rebord et la grille de répartition recouvre ce rebord et est réalisée en un matériau élastique. Ainsi, la grille de répartition a également une fonction de joint vis-à-vis de la partie de l'appareil sur laquelle la chaudière est montée.

D'autres caractéristiques et avantages de l'invention résulteront encore de la description ci-après d'exemples non limitatifs en référence aux dessins annexés dans lesquels :

la figure 1 est une vue de dessus d'une chaudière selon l'invention sans grille de répartition ;

la figure 2 est une vue de dessous de la chaudière selon l'invention ;

la figure 3 est une vue en coupe selon le plan III-III de la figure 1 avec grille de répartition ;

la figure 4 est une vue en coupe selon le plan IV-IV de la figure 1 avec grille de répartition ;

la figure 5 est une vue de dessus de la grille de répartition selon l'invention ;

la figure 6 est une vue de dessous d'une première variante de réalisation de chaudière selon l'invention ;

la figure 7 est une vue de dessous d'une seconde variante de réalisation de chaudière selon l'invention.

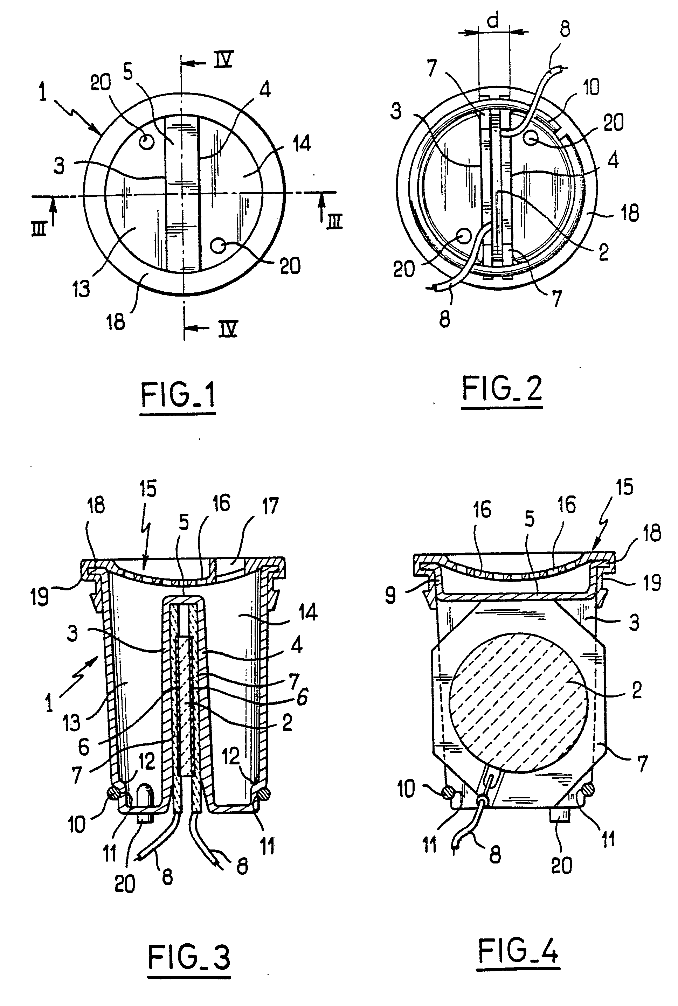

En référence aux figures 1 à 4, la chaudière comprend un récipient 1 et un organe chauffant 2 qui lui est associé. Selon l'invention, le récipient 1 comporte au moins deux éléments de paroi 3, 4 en regard ayant un profil complémentaire de l'organe chauffant et reliés entre eux de façon déformable par une partie de paroi 5 formant un pont entre les éléments de paroi en regard 3, 4.

Dans le mode de réalisation représenté, l'organe chauffant 2 est une résistance à coefficient de température positif en forme de pastille disposée entre deux électrodes planes conductrices 6 elles-mêmes encadrées par des plaques 7 électriquement isolantes et thermiquement conductrices. Les électrodes planes 6 sont reliées à des fils d'alimentation 8.

L'organe chauffant est ainsi disposé entre les éléments de paroi 3, 4 qui sont maintenus contre l'organe chauffant par des moyens de rappel comprenant d'une part la partie supérieure 9 du récipient déformable de façon élastique et d'autre part un anneau fendu 10 réalisé dans un matériau à ressort, par exemple un acier à ressort et disposé à la base du récipient dans une rainure 11 réalisée dans un épaulement 12 dirigé vers l'intérieur dans la zone d'application de l'anneau fendu 10.

On comprendra que si le matériau utilisé pour réaliser le récipient 1 est un matériau très élastique il pourra dans certains cas être inutile de prévoir un anneau fendu 10. Dans ce cas en effet, on pourra prévoir entre les faces en regard des éléments de paroi 3 et 4 une distance d inférieure, au repos, à l'épaisseur de l'empilage de l'organe chauffant 2, des électrodes 6 et des plaques isolantes 7, ceux-ci étant mis en place à force et étant maintenus dans la position désirée par la force résultant de l'élasticité de la partie de paroi 5 et de la partie supérieure 9 du récipient. D'autres moyens de rappel peuvent également être utilisés, par exemple à un anneau non fendu emmanché à force à la base du récipient après mise en place de l'organe chauffant 2.

Avec une chaudière d'environ 35 cm³ réalisée en aluminium et équipée d'une résistance en céramique en forme de pastille circulaire d'environ 3 cm de diamètre et 3 mm d'épaisseur, d'une puissance de 200 watts et disposée entre deux électrodes planes de quelques dixièmes de millimètre d'épaisseur et des plaques d'alumine d'environ 2 mm d'épaisseur, on a pu porter de l'eau à ébullition en 2 minutes.

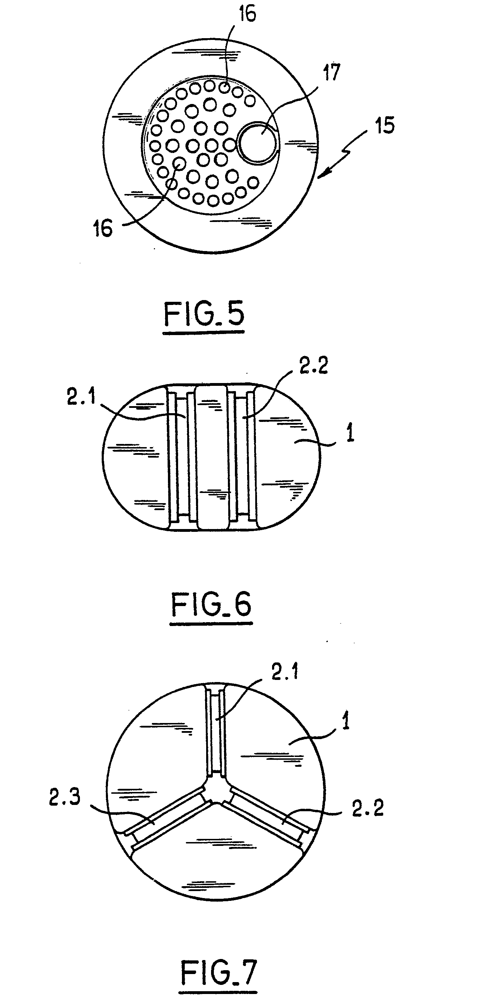

Dans le cas du mode de réalisation illustré par les figures 1 à 4, le récipient 1 est sensiblement cylindrique et les éléments de paroi 3, 4 sont disposés parallèlement à un diamètre de sorte qu'ils forment un bossage creux sensiblement diamétral s'étendant à l'intérieur du récipient à partir du fond de celui-ci. Bien entendu, des dispositions très variées peuvent être adoptées, en particulier les éléments de paroi 3, 4 enserrant l'organe chauffant peuvent être disposés transversalement à partir de la paroi latérale. De plus, ainsi que cela est représenté sur les figures 6 et 7, on peut disposer plusieurs organes chauffants à l'intérieur d'un même récipient.

Dans le cas de la figure 6, deux organes chauffants 2.1 et 2.2 sont disposés parallèlement l'un à l'autre et transversalement au récipient 1 à partir du fond de celui-ci. Dans le cas de la figure 7, trois organes chauffants 2.1, 2.2 et 2.3 sont disposés radialement en étoile, l'ensemble de la chaudière ayant par ailleurs sensiblement la même structure que celle qui a été décrite en référence aux figures 1 à 4.

On remarque sur les figures 1 et 3 que les éléments de paroi 3, 4 qui s'étendent diamétralement à partir du fond du récipient délimitent avec la paroi externe de celui-ci deux compartiments séparés 13, 14. Lors du remplissage du récipient 1, il arrive que le produit à chauffer, par exemple de l'eau, soit versé uniquement dans l'un des compartiments et on prévoit donc de préférence des éléments de paroi 3, 4 d'une hauteur inférieure à la hauteur totale du récipient 1 afin que le produit puisse s'écouler dans le second compartiment lorsque le premier est rempli.

De plus, afin d'obtenir un chauffage efficace, il est souhaitable que les deux compartiments soient remplis au même niveau. On prévoit donc avantageusement de disposer à la partie supérieure de la chaudière une grille de répartition 15 (figures 3, 4 et 5) comportant une série de petits trous 16, par exemple de l'ordre de 2 mm de diamètre pour une chaudière devant être utilisée avec de l'eau. Le faible diamètre des trous 16 crée une résistance à l'écoulement et l'eau versée sur la grille se répartit donc sur l'ensemble de la surface de celle-ci avant de s'écouler à peu près également dans les compartiments 13 et 14.

En raison du faible diamètre des trous 16, un phénomène de capillarité risque de se produire empêchant l'air contenu dans le récipient 1 de s'échapper et arrêtant donc l'écoulement à travers la grille 15. Pour éviter ce phénomène, on prévoit de préférence une ouverture d'échappement 17 de l'air contenu dans le récipient 1.

Selon une réalisation préférée, le récipient 1 comporte un rebord 18 et la grille de répartition 15 recouvre ce rebord et est réalisée en un matériau élastique, par exemple en élastomère. Ainsi, lors de la mise en place de la chaudière dans l'appareil ménager, la grille 15 réalise un joint d'étanchéité vis-à-vis de la partie de l'appareil (non représentée) disposée au-dessus de la chaudière, par exemple une cheminée de distribution de la vapeur.

Sur le mode de réalisation illustré par les figures 3 et 4, le pourtour 19 de la grille 15 est profilé pour former un joint étanche autour du rebord du récipient. Ainsi la vapeur ne peut s'échapper que par les orifices 16 et 17 et peut donc être canalisée en vue de son usage.

Afin de fixer la chaudière sur un socle (non représenté) on prévoit dans le fond du récipient 1 des bossages creux 20 dans lesquels des vis peuvent être fixées.

Bien entendu l'invention n'est pas limitée au mode de réalisation décrit ci-dessus et on peut y apporter des variantes d'exécution.

En particulier, l'élément chauffant peut être réalisé sous forme cylindrique et les éléments de paroi 3, 4 ont alors de préférence la forme de deux demi-coquilles.

Bien entendu on peut prévoir sur la chaudière des accessoires habituels tels que des capteurs pour une régulation de température, des bossages pour une mise à la masse ou un revêtement anti-adhésif à l'intérieur du récipient.

**Revendications**

1. Chaudière pour appareil ménager comprenant un récipient (1) comportant au moins deux éléments de paroi (3, 4) en regard et ayant un profil complémentaire d'un organe chauffant (2) disposé entre ces éléments de paroi (3, 4), caractérisée en ce que les éléments de paroi sont reliés entre eux par une partie de paroi déformable (5) formant un pont et en ce que des moyens de rappel (5, 9, 10) maintiennent les éléments de paroi (3, 4) en appui contre l'organe chauffant (2) moyennant déformation de la partie de paroi (5) formant un pont.

2. Chaudière conforme à la revendication 1, caractérisée en ce que les moyens de rappel comprennent une partie (5, 9) de la paroi du récipient déformable de façon élastique.

3. Chaudière conforme à la revendication 1 ou à la revendication 2, caractérisée en ce que les moyens de rappel comprennent un anneau fendu (10) en matériau à ressort.

4. Chaudière conforme à la revendication 3, caractérisée en ce que le récipient (1) comporte sur une partie au moins de son pourtour une rainure (11) de retenue de l'anneau fendu (10).

5. Chaudière conforme à l'une des revendications 1, 3 ou 4, caractérisée en ce que le récipient (1) présente un épaulement (12) dirigé vers l'intérieur dans la zone d'application des moyens de rappel (10).

6. Chaudière conforme à l'une des revendications 1 à 5, caractérisée en ce que l'organe chauffant (2) est une résistance à coefficient de température positif en forme de pastille disposée entre deux électrodes planes conductrices (6) elles-mêmes encadrées par des plaques (7) électriquement isolantes et thermiquement conductrices.

7. Chaudière conforme à l'une des revendications 1 à 6, caractérisée en ce qu'elle comporte à sa partie supérieure une grille de répartition (15) du produit à chauffer.

8. Chaudière conforme à la revendication 7, caractérisée en ce que la grille de répartition (15) comporte une ouverture d'échappement (17) de l'air contenu dans le récipient (1).

9. Chaudière conforme à la revendication 7 ou à la revendication 8, caractérisée en ce que le récipient (1) comporte un rebord (18) et en ce que la grille de répartition (15) recouvre ce rebord (18) et est réalisée en un matériau élastique.

10. Chaudière conforme à la revendication 9, caractérisée en ce que le pourtour (19) de la grille de répartition est profilé pour former un joint étanche autour du rebord (18) du récipient (1).

## Claims

1. Boiler for a domestic appliance comprising at least two mutually facing wall members (3, 4) whose profile is complementary to a heating element (2) disposed between said wall members (3, 4), characterized in that the wall members are connected together by a deformable wall portion (5) forming a bridge, and in that the wall members (3, 4) are held against the heating element (2) by return means (5, 9, 10) in conjunction with a deformation of the wall portion (5) forming a bridge.

2. Boiler according to claim 1, characterized in that the return means comprise a resiliently deformable portion (5, 9) of the wall of the vessel.

3. Boiler according to claim 1 or claim 2, characterized in that the return means comprise a split ring (10) of spring material.

4. Boiler according to claim 3, characterized in that the vessel (1) is provided on at least part of its periphery with a groove (11) retaining the split ring (10).

5. Boiler according to one of claims 1, 3 or 4, characterized in that the vessel (1) has an inwardly directed shoulder (12) in the zone in which the return means (10) is applied.

6. Boiler according to one of claims 1-5, characterized in that the heating means (2) is a resistor having a positive temperature coefficient and the form of a plate disposed between two flat conductive electrodes, which in turn are inserted between electrically insulating, thermally conductive plates (7).

7. Boiler according to one of claims 1-6, characterized by being provided at the top thereof with a grid (15) for distributing the product which is to be heated.

8. Boiler according to claim 7, characterized in that the distribution grid (15) has an escape opening (17) for the air contained in the vessel (1).

9. Boiler according to claims 7 or 8, characterized in that the vessel (1) has a flange (18) and in that the distribution grid (15) covers this flange and is made of a resilient material.

10. Boiler according to claim 9, characterized in that the periphery (19) of the distribution grid is profiled to form a fluidtight seal around the flange (18) of the vessel (1).

## Patentansprüche

1. Heizkessel für ein Haushaltsgerät, mit einem Behälter (1), der wenigstens zwei Wandungselemente (3, 4) umfaßt, die einander gegenüberliegen und ein Profil aufweisen, welches komplementär zu einem Heizorgan (2) ist, das zwischen diesen Wandungselementen (3, 4) angeordnet ist, dadurch gekennzeichnet, daß die Wandungselemente untereinander durch einen deformierbaren Wandungsteil (5) verbunden sind, der eine Brücke bildet, und daß Rückholmittel (5, 9, 10) die Wandungselemente (3, 4) in Abstützung an dem Heizorgan (2) durch Deformierung des eine Brücke bildenden Wandungsteils (5) halten.

2. Heizkessel nach Anspruch 1, dadurch gekennzeichnet, daß die Rückholmittel einen Teil (5, 9) der Wandung des Behälters umfassen, der elastisch deformierbar ist.

3. Heizkessel nach Anspruch 1 oder 2, dadurch gekennzeichnet, daß die Rückholmittel einen geschlitzten Ring (10) aus Federmaterial umfassen.

4. Heizkessel nach Anspruch 3, dadurch gekennzeichnet, daß der Behälter (1) auf wenigstens einem Teil seines Umfangs eine Rille (11) zum Halten des geschlitzten Ringes (10) aufweist.

5. Heizkessel nach einem der Ansprüche 1, 3 oder 4, dadurch gekennzeichnet, daß der Behälter (1) in der Zone, in welcher die Rückholmittel (10) anliegen, eine nach innen gerichtete Schulter (12) aufweist.

6. Heizkessel nach einem der Ansprüche 1 bis 5, dadurch gekennzeichnet, daß das Heizorgan (2) ein Widerstand mit positivem Temperaturkoeffizient in Form eines Plättchens ist, das zwischen zwei ebenen leitfähigen Elektroden (6) angeordnet ist, welche ihrerseits von zwei elektrisch isolierenden Platten (2), die thermisch leitfähig sind, eingerahmt sind.

7. Heizkessel nach einem der Ansprüche 1 bis 6, dadurch gekennzeichnet, daß er an seinem oberen Teil ein Gitter zur Verteilung (15) des zu erhitzenden Produktes umfaßt.

8. Heizkessel nach Anspruch 7, dadurch gekennzeichnet, daß das Verteilungsgitter (15) eine Öffnung (17) zum Auslassen der in dem Behälter (1) enthaltenen Luft aufweist.

9. Heizkessel nach Anspruch 7 oder Anspruch 8, dadurch gekennzeichnet, daß der Behälter (1) einen Rand (18) aufweist und daß das Verteilungsgitter (15) diesen Rand (18) abdeckt und aus einem elastischen Material gefertigt ist.

10. Heizkessel nach Anspruch 9, dadurch gekennzeichnet, daß der Umfang (19) des Verteilungsgitters so profiliert ist, daß er eine Dichtung bildet, die um den Rand (18) des Behälters (1) herum abdichtet.

FIG.1

FIG.2

FIG.3

FIG.4

16
17
15
16

## FIG. 5

2.1
2.2
1

## FIG. 6

2.1
1
2.3
2.2

## FIG. 7